(19) Europäisches Patentamt
European Patent Office
Office européen des brevets

(11) **EP 1 432 288 B1**

(12) **EUROPEAN PATENT SPECIFICATION**

(45) Date of publication and mention
of the grant of the patent:
**09.07.2008 Bulletin 2008/28**

(51) Int Cl.:
***H05B 3/74*** *(2006.01)*    ***G01V 3/10*** *(2006.01)*

(21) Application number: **02028040.0**

(22) Date of filing: **16.12.2002**

(54) **Pan detection system and method using such system**

Topferkennungs-System und Verfahren zur Verwendung eines solchen Systems

Système de détection de la présence d'un récipient et méthode pour l'utilisation d'un tel système

(84) Designated Contracting States:
**DE ES FR GB IT**

(43) Date of publication of application:
**23.06.2004 Bulletin 2004/26**

(73) Proprietor: **WHIRLPOOL CORPORATION**
**Benton Harbor**
**Michigan 49022 (US)**

(72) Inventors:
• **Parachini, Davide,**
**Patent Dept.**
**21025 Comerio (IT)**

• **Pastore, Cristiano,**
**Patent Dept.**
**21025 Comerio (IT)**
• **Petrigliano, Rocco,**
**Patent Dept.**
**21025 Comerio (IT)**

(74) Representative: **Guerci, Alessandro**
**Whirlpool Europe S.r.l.**
**Patent Department**
**Viale G. Borghi 27**
**21025 Comerio (VA) (IT)**

(56) References cited:
**EP-A- 1 087 641**    **EP-A- 1 206 164**
**US-A- 3 676 772**    **US-A- 4 868 910**

EP 1 432 288 B1

## Description

The present invention relates to a system for detecting the presence of a cooking utensil on a cooking hob comprising detection means whose impedance changes in relation to the presence or absence of said cooking utensil on the hob. The system according to the invention is particularly useful for use with cooking utensils detection system on glass ceramic electric cooking hob.

The known pan detection systems may be divided into four main categories: optical, mechanical, electronic capacitive and electronic inductive. The last category (to which the present invention belongs) can be further divided into two sub-categories: conventional inductive systems, as described in EP-A-553425 and cross-inductive (or mutual-inductive) systems, as described in EP-A-1206164.

The conventional inductive systems are based on a sensor coil, placed inside the hob and connected to an electronic oscillating circuit, whose oscillation frequency or amplitude changes when a metal cooking utensil is placed over the hob.

The cross-inductive systems are based on the idea of injecting a radiofrequency signal into a first coil and detecting the signal coupled into another receiving coil placed in the vicinity of the cooking surface, then relying on the variation of coupling strength caused by the presence or absence of the cooking utensil.

The main parameters whose variation can influence the output signals of the inductive pan detection systems are the geometrical layout, frequency of the injected signal, magnetic properties of the materials that make up the coils and magnetic properties of the materials that make up the structure close to the sensing system.

DE-A-3711589 describes the technique for single heating elements where both the emitting coil and the receiving coil are different from the heating coil. EP-A-1087641 describes a configuration substantially similar to DE-A-3711589 with some small differences in how the emitting and receiving coils are electrically tied together. EP-A-1206164 describes a method for using the same heating coil also as electromagnetic field emitter and, for this reason, is particularly well suited for detecting cooking utensils on cooking hobs with a discrete distributed heating elements, as disclosed in IT-A-MI2000A000926.

Substantially all the inductive methods produce an output signal characterised by high errors caused by the variation of the magnetic characteristics of the heating element over temperature. Said variation can be, in some cases, of the same order of magnitude of the variation induced by the presence/absence of the cooking utensil. This can lead to an unreliable working of the present detection systems.

It is well known that the main physical phenomena behind that variation is the Curie temperature crossing of the heather alloy, i.e. the temperature over which the magnetic permeability ($\mu_r$) of the material abruptly falls from a typical value of some tenth to unity. But also for temperatures below the Curie temperature, the effects of temperature changes can greatly affect the reliability of the signal related to the presence/absence of a cooking utensil.

All known pan detection systems are similar in the sense that them all rely on the processing of a single electrical quantity, directly or indirectly related to a physical quantity — the impedance or mutual impedance - that is actually described by a complex number (i.e. having 2 components).

US-A-5900174 describes an algorithmic method for rejecting the temperature-induced variation of the output signal by knowing the power control switching times. Said method has the disadvantage of being applicable only with on/off power control methods, (hence not applicable to continuos or quasi-continuos power controls). Moreover said known method is able to compensate only for the sharp variation caused by the Curie temperature crossing and not for the smooth variations experienced at temperatures below that temperature.

US-A-3676772 discloses a metallic intrusion detector system comprising a transmitting coil and a receiving coil.

It is an object of the present invention to overcome or minimise the problem of the temperature-induced drift of pan-detection signals experienced in inductive pan detection systems.

According to the present invention there is provided a special circuitry and a method for processing the parameters of the complex impedance signals produced by the detection system, that simultaneously minimize the influence of the temperature on the pan detection signal and enhances the strength of the pan-presence information, resulting in an overall increased performance, reliability and accuracy. The system and method disclosed in the present invention have the additional advantage of being able to give information on the type of metal of the cooking utensil.

The applicant has surprisingly discovered that, by using a detection circuitry that can detect not only the amplitude or frequency shift induced in the detection circuit by the impedance variation caused by the presence or absence of a cooking utensil, but both the magnitude and the phase angle of the complex impedance or mutual-impedance of the sensing coil(s), the influence of the temperature in the pan detection signal is substantially negligible. According to the invention, said complex impedance or mutual impedance is processed in analogue or digital way, in order to extract a new quantity highly correlated to the cooking utensil presence and negligibly correlated to the temperature.

The two signals produced by the detection circuitry are processed by a specific algorithm that, mathematically combining the two signals, extract a third signal that is less influenced by the temperature and much more related to the actual pot presence than the signal obtained with the known pan detection systems.

The invention will be more apparent from the detailed description of preferred embodiments thereof given hereinafter by way of non-limiting example and illustrated in the accompanying drawings, in which:

- Figure 1 is a block diagram of a pan detection system according to the invention, in a cross-inductive configuration;
- Figure 2 is an example of how the complex (mutual) impedance is shown in the complex plane;
- Figure 3 is a block diagram of a pan detection system according to a second embodiment of the invention, in a mutual inductive configuration;
- Figure 4 is a diagram showing the difference between the pan detection signal in a system according to prior art, and the pan detection signal (compensated) in the system according to the invention;
- Figure 5 is a simplified general model for mutual-inductive pan detection systems;
- Figure 6 is a simplified general model for inductive pan detection system;
- Figure 7 is a collection of diagrams showing the pan detection signals according to a prior art method and according to the present invention; and
- Figure 8 is a view of the complex mutual-impedance plane showing different trajectories of the impedance signal.

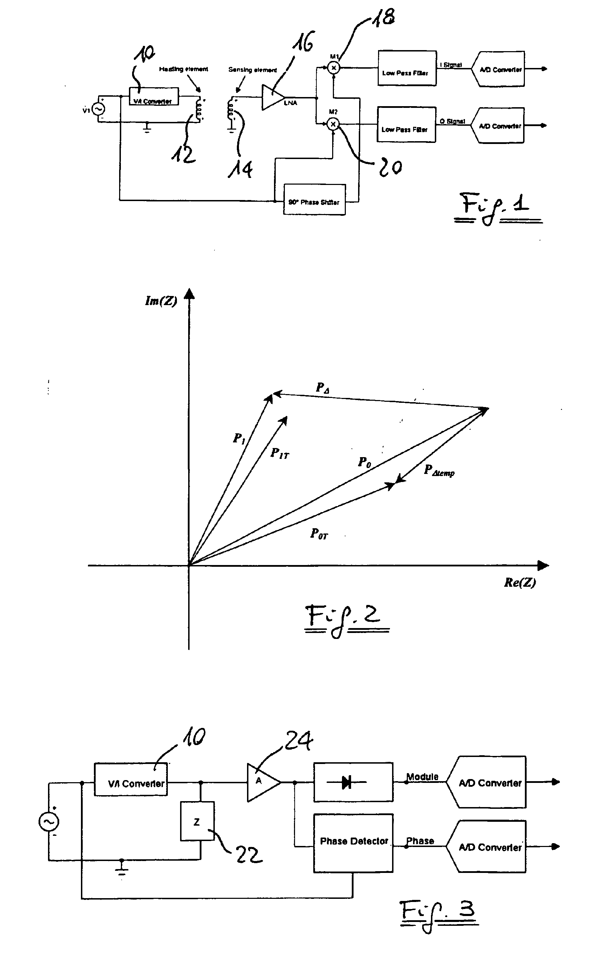

Referring to figure 1, a first embodiment of the pan detection system according to the invention is arranged as follows. An AC signal is fed to a voltage-to-current converter 10. Said AC current is applied to a heating element 12 or, in an alternative arrangement, to a separated coil. A loop 14 made by conductive material is placed above the heating element or coil 12 in order to pick up part of the field generated by the first coil 12. The voltage induced in the receiving coil 14 is first amplified by a low noise amplifier stage 16 and then synchronously demodulated by means of a couple of product amplifiers 18 and 20. One of such amplifiers, indicated with reference 20, is fed by a signal that is synchronous and in phase with the current injected in the emitting coil 12, while the other is still synchronous but 90° degrees shifted. Both those signals are then low pass filtered to remove high frequency product artifacts. We can call the first signal "the signal in phase" or $P_I$ and the second signal "the signal in quadrature" or $P_Q$.

In figure 3 a second embodiment is shown, for "inductive" configurations, i.e. topologies in which there's only a single detecting loop. An AC signal is fed to a voltage-to-current converter 10. Said AC current is applied to a conductive element 22 having impedance Z and placed in the proximity of the heating element. The voltage induced in conductive element 22 is amplified in 24 and the module and phase of the signal from the amplifier 24 can be called $P_I$ and

$P_Q$ (signal in phase and signal in quadrature) as in the first embodiment.

In order to better understand the invention, we define the following quantities, partly shown in figure 2:

$$P = P_I + j \cdot P_Q$$

$$P_0 = P_{I0} + j \cdot P_{Q0}$$

$$P_1 = P_{I1} + j \cdot P_{Q1}$$

$$|P| = \sqrt{P_I^2 + P_Q^2}$$

$$\angle P = \tan^{-1}(\frac{P_Q}{P_I})$$

Where:

P represents the generic complex measurement of impedance or mutual-impedance,
$\angle P$ represents the phase (referred to the injected current) of the received signal,
$|P|$ represents the magnitude (referred to the injected current) of the received signal,
$P_0$ represents the measurement without cooking utensil and cold hob,
$P_1$ represents the measurement with cooking utensil and cold hob,
$P_{0T}$ represents the measurement without cooking utensil and hot hob,
$P_{1T}$ represents the measurement with cooking utensil and hot hob,
$P_\Delta$ represents the generic measurement variation compared to $P_0$

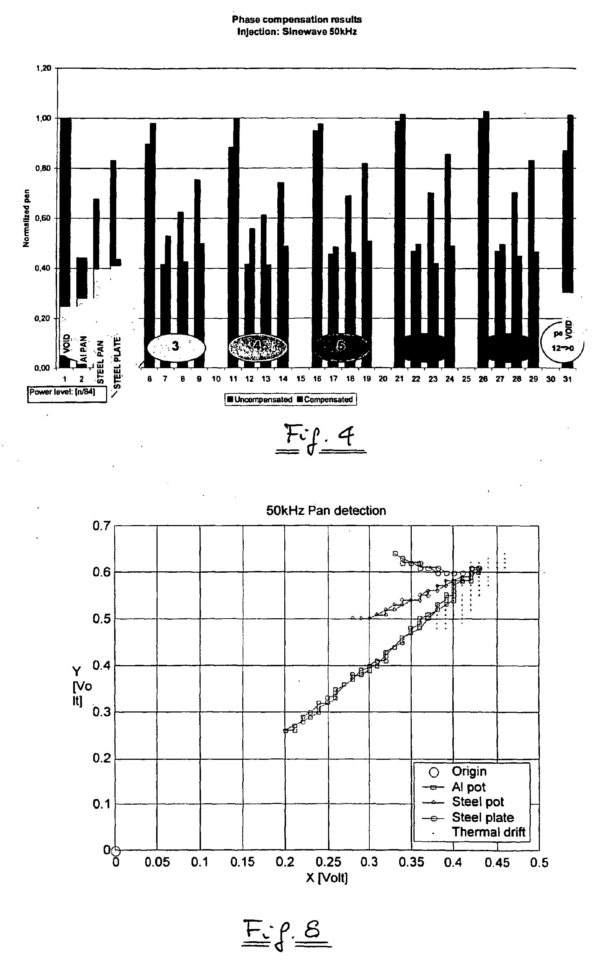

Figure 2 shows a typical example of what actually happens: the change in magnitude of the complex (mutual)-impedance caused by the cooking utensil is similar to the change due to the temperature increase of the heating element. On the other hand, the phase shift has a significantly different behavior having, in some cases, even a different sign. This behavior can be seen also in Figure 8 where different trajectories are shown in the complex mutual-impedance plane cause by pot presence and thermal drifts: as one can easily see, despite the magnitude of the paths are similar for a steel pot compared to the thermal drift, the "direction" of the paths of the thermal drift and of the presence/absence of the steel pot is completely different.

In other words, by looking at magnitude and phase simultaneously, a much better estimation about the actual presence of the cooking utensil over the surface can be obtained.

According to Figure 8, it is clear that the parameters of the complex impedance can be also used not only for detecting the presence of a cooking utensils, but also for giving to the electronic control system of the cooking hob an indication on the type of cooking utensil, and particularly of the material thereof, placed on the hob in order to adjust the heating process accordingly.

Having the compound information of the two parameters of the complex impedance, i.e. magnitude and phase, it is easy to find, with classical optimization methods, an estimator that is highly correlated to the presence of the cooking utensil and, on the other hand, very weakly influenced by the change in operating temperature of the hob. One possible general form of such estimator could be:

$$P_{est} = k_1 \cdot \left|P_\Delta\right| + k_2 \cdot \angle P_\Delta$$

where $k_1$ and $k_2$ are suitable constants obtained by standard error minimization techniques carried out on actual experimental data. Despite more complex forms of estimators are of course possible, the proposed one is, in most cases, able to give good temperature compensation with a reduced computational complexity both with analog and with digital implementations.

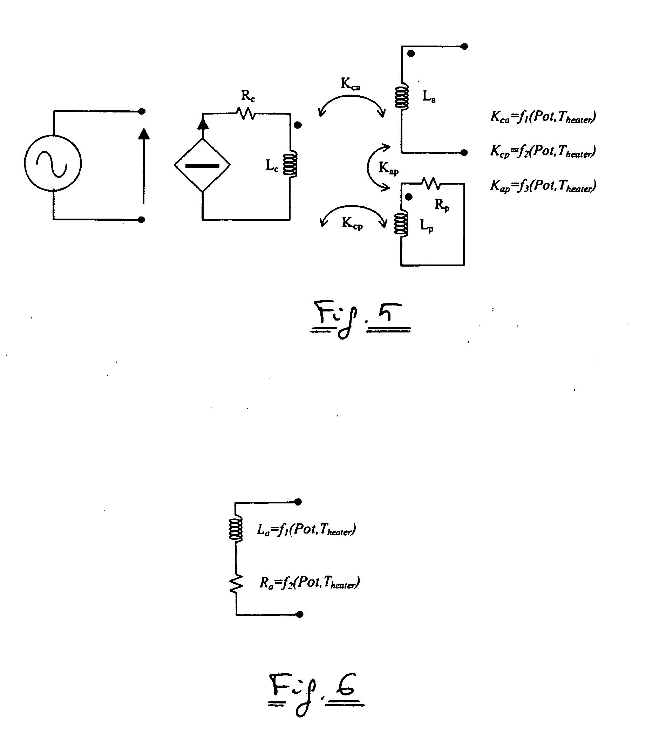

The reason why the combined signal, or estimator, is far less influenced by the temperature and much more related to the actual presence of the pan can be also understood by examining the simplified model of the physical phenomena shown in Figure 6 for the inductive methods and in Figure 5 for the cross-inductive methods. For both inductive methods, the pot presence influences the receiving coil's inductance and resistance as well; the same stands for the heating element temperature.

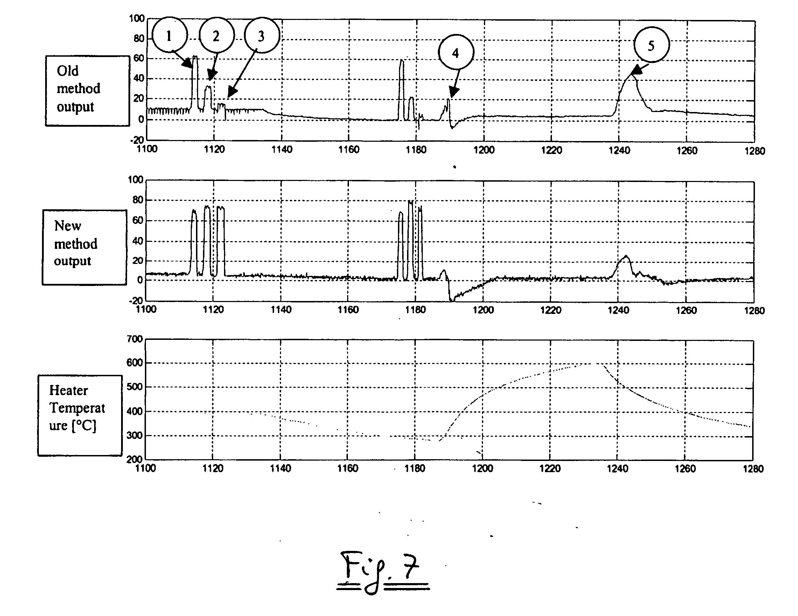

In figure 7, the upper diagram shows how the pan detection signal is reduced by the presence of a pan according to a prior art detection system. On the X-axis is time (in second) and on the Y-axis is the percentage of reduction of the signal. With the references 1, 2 and 3 it is shown how the signal changes when a cooking utensil of aluminum, of steel and of ferritic steel respectively, is placed and removed from the hob, while with references 4 and 5 it is shown how the signal changes due to changes of temperature of the heater, and switching on and off thereof. Looking at the upper diagram of figure 7, it is clear that the change of the magnitude of the pan detection signal can be lower than the change of the signal due to change of temperature, or thermal drift. The central diagram of figure 7 shows, for the same cooking utensils used in the upper diagram, how the pan detection signal changes according to the invention: it is always much higher than any disturbance due to temperature changes or thermal drifts.

This is also shown in diagram 4, which illustrates a comparison between the signals of a old system and of the system according to the invention, for different power levels of the heating element (increasing from left to right with reference to X axis) and for different cooking utensils, as specified above. It is clear that even by increasing the power (and therefore the temperature) of the heating elements, with the system according to the invention there is always a big gap between the signal with or without the cooking utensil on the hob.

The system according to the invention is useful not only for detecting the presence of the pan, but also for detecting where the pan is placed when a plurality of resistors are distributed in matrix formation below a heat-resistance surface on which the utensil can be located in a random manner. In this peculiar technical solution the reliability and accuracy of the detection system is important not only for an automatic switching-on/switching-off of each small heating cell due to the presence of the cooking utensil, but also for switching on only those heating cells which are below the randomly placed cooking utensil.

**Claims**

1. A system for detecting the presence of a cooking utensil on a cooking hob, comprising detection means (12, 14, 22) located under the cooking surface whose impedance changes due to the presence of said cooking utensil on the hob, **characterized in that** such detection means comprise an electronic circuit (10, 16, 18, 20, 22, 24) adapted to assess parameters of the complex impedance or mutual-impedance (P) and to use them for providing a signal indicative of the presence of the cooking utensil.

2. A system according to claim 1, **characterized in that** a probing coil (22) is placed below the cooking surface of the cooking hob and it is adapted to be supplied with alternating current, said electronic circuit (10, 24) being adapted to measure the parameters of the complex impedance (P) of said probing coil (22).

3. A system according to claim 1, **characterized in that** an emitting coil (12) and a pick-up coil (14) are provided said electronic circuit (10, 16, 18, 20) being adapted to measure the parameters of the complex cross-impedance (P) between the emitting coil (12) and the pick-up coil (14).

4. A system according to claim 3, **characterized in that** the emitting coil (12) is also a heating element of the cooking hob.

5. A system according to any of the preceding claims, **characterized in that** the parameters of the complex impedance (P) are the magnitude of the received signal and phase thereof.

6. A system according to claim 5, **characterized in that** the signal indicative of the presence of the cooking utensil is as follows:

$$P_{est} = k_1 \cdot \left| P_\Delta \right| + k_2 \cdot \angle P_\Delta$$

where $P_\Delta$ represents the magnitude of the difference between the received signals, $\angle P$ represents the difference of phase of the received signals and $k_1$ and $k_2$ represent experimental constants.

7. Method for detecting the presence of a cooking utensil on a cooking hob on the basis of a change of impedance (P) in a conductive element placed in the proximity of the heating element, **characterized in that** parameters of the complex impedance or mutual-impedance (P) are assessed and used in order to give a signal indicative of the presence of the cooking utensil.

8. Method according to claim 7, **characterized in that** the magnitude and the phase of the complex impedance (P) are measured.

9. Method according to claim 8, **characterized in that** the magnitude and the phase of the complex impedance (P) are combined together in order to provide said signal indicative of the presence of the cooking utensil.

**Patentansprüche**

1. System zum Detektieren des Vorliegens eines Kochutensils auf einer Kochplatte, mit einer Detektionsvorrichtung (12, 14, 22), die unter der Kochfläche lokalisiert ist, deren Impedanz sich aufgrund des Vorliegens des Kochutensils auf der Platte ändert, **dadurch gekennzeichnet, dass** die Detektionsvorrichtung eine elektronische Schaltung (10, 16, 18, 20, 22, 24) umfasst, die angepasst ist, die Parameter der komplexen Impedanz oder wechselseitigen Impedanz (P) zu beurteilen und diese zum Bereitstellen eines Signals zu verwenden, das das vorliegen des Kochutensils anzeigt.

2. System nach Anspruch 1, **dadurch gekennzeichnet, dass** eine Testspule (22) unter der Kochfläche der Kochplatte angeordnet ist und diese angepasst ist, mit einem Wechselstrom versorgt zu werden, wobei die elektronische Schaltung (10, 24) angepasst ist, die Parameter der komplexen Impedanz (P) des Testspule (22) zu messen.

3. System nach Anspruch 1, **dadurch gekennzeichnet, dass** eine emittierende Spule (12) und eine Aufnahmespule (14) bereitgestellt sind, wobei die elektronische Schaltung (10, 16, 18, 20) angepasst ist, die Parameter der komplexen Kreuzimpedanz (P) zwischen der emittierenden Spule (12) und der Aufnahmespule (14) zu messen.

4. System nach Anspruch 3, **dadurch gekennzeichnet, dass** die emittierende Spule (12) ebenso ein Heizelement der Kochplatte ist.

5. System nach einem der vorangehenden Ansprüche, **dadurch gekennzeichnet, dass** die Parameter der komplexen Impedanz (P) die Größe des empfangenen Signals und dessen Phase sind.

6. System nach Anspruch 5, **dadurch gekennzeichnet, dass** das Signal, das das Vorliegen des Kochutensils anzeigt, wie folgt ist:

$$P_{est} = k_1 \cdot \left| P_\Delta \right| + k_2 \cdot \angle P_\Delta \ ,$$

wobei $P_\Delta$ die Größe des Unterschieds zwischen den empfangenen Signalen darstellt, $<P$ den Unterschied des Phase der empfangenen Signale darstellt und $k_1$ und $k_2$ experimentelle Konstanten darstellen.

7. Verfahren zum Detektieren des Vorliegens eines Kochutensils auf einer Kochplatte auf der Basis einer Änderung einer Impedanz (P) in einem leitenden Element, das in der Nähe des Heizelements angeordnet ist, **dadurch gekennzeichnet, dass** Parameter der komplexen Impedanz oder wechselseitigen Impedanz (P) beurteilt werden und verwendet werden, ein Signal zu ergeben, dass das Vorliegen des Kochutensils anzeigt.

8. Verfahren nach Anspruch 7, **dadurch gekennzeichnet, dass** die Größe und Phase der komplexen Impedanz (P) gemessen werden.

9. Verfahren nach Anspruch 8, **dadurch gekennzeichnet, dass** die Größe und die Phase der komplexen Impedanz (P) zusammen kombiniert werden, um das Signal bereitzustellen, das das Vorliegen eines Kochutensils anzeigt.

**Revendications**

1. Système pour détecter la présence d'un ustensile de cuisson sur une table de cuisson, comportant des moyens de détection (12, 14, 22) situés sous la surface de cuisson dont l'impédance change à cause de la présence dudit ustensile de cuisson sur la plaque, **caractérisé en ce que** ces moyens de détection comprennent un circuit électronique (10, 16, 18, 20, 22, 24) adapté pour évaluer des paramètres de l'impédance complexe ou de l'impédance mutuelle (P) et les utiliser pour délivrer un signal indiquant la présence de l'ustensile de cuisson.

2. Système selon la revendication 1, **caractérisé en ce qu'**une bobine de sondage (22) est placée sous la surface de cuisson de la plaque de cuisson et elle est adaptée pour être alimentée en courant alternatif, ledit circuit électronique (10, 24) étant adapté pour mesurer les paramètres de l'impédance complexe (P) de ladite bobine de sondage (22).

3. Système selon la revendication 1, **caractérisé en ce qu'**une bobine d'émission (12) et une bobine de prélèvement (14) sont prévues, ledit circuit électronique (10, 16, 18, 20) étant adapté pour mesurer les paramètres de l'impédance croisée complexe (P) entre la bobine d'émission (12) et la bobine de prélèvement (14).

4. Système selon la revendication 3, **caractérisée en ce que** la bobine d'émission (12) est également un élément chauffant de la plaque de cuisson.

5. Système selon l'une quelconque des revendications précédentes, **caractérisé en ce que** les paramètres de l'impédance complexe (P) sont l'amplitude du signal et de la phase reçus de celle-ci.

6. Système selon la revendication 5, **caractérisé en ce que** le signal indiquant la présence de l'ustensile de cuisson est comme suit :

$$P_{est} = k_1 . |P_\Delta| + k_2 . \angle P_\Delta$$

où $P_\Delta$ représente l'amplitude de la différence entre les signaux reçus, $\angle P$ représente la différence de la phase des signaux reçus et $k_1$ et $k_2$ représentent des constantes expérimentales.

7. Procédé pour détecter la présence d'un ustensile de cuisson sur une plaque de cuisson en fonction d'un changement d'impédance (P) dans un élément conducteur placé à proximité de l'élément chauffant, **caractérisé en ce que** les paramètres de l'impédance complexe ou de l'impédance mutuelle (P) sont évalués et utilisés afin de donner un signal indiquant la présence de l'ustensile de cuisson.

8. Procédé selon la revendication 7, **caractérisé en ce que** l'amplitude et la phase de l'impédance complexe (P) sont mesurées.

9. Procédé selon la revendication 8, **caractérisé en ce que** l'amplitude et la phase de l'impédance complexe sont combinées afin de délivrer ledit signal indiquant la présence de l'ustensile de cuisson.

*Fig. 1*

*Fig. 2*

*Fig. 3*

**Phase compensation results**
**Injection: Sinewave 50kHz**

*Fig. 4*

**50kHz Pan detection**

*Fig. 8*

$K_{ca}=f_1(Pot,T_{heater})$

$K_{cp}=f_2(Pot,T_{heater})$

$K_{ap}=f_3(Pot,T_{heater})$

Fig. 5

$L_a=f_1(Pot,T_{heater})$

$R_a=f_2(Pot,T_{heater})$

Fig. 6

9

EP 1 432 288 B1

Old method output

New method output

Heater Temperature [°C]

Fig. 7

**EP 1 432 288 B1**

**REFERENCES CITED IN THE DESCRIPTION**

**Patent documents cited in the description**

- EP 553425 A
- EP 1206164 A
- DE 3711589 A
- EP 1087641 A
- IT MI20000926 A
- US 5900174 A
- US 3676772 A